# EUROPÄISCHE PATENTSCHRIFT

(11) **EP 2 572 117 B1**
(45) Veröffentlichungstag und Bekanntmachung des Hinweises auf die Patenterteilung: **18.05.2016**
(21) Anmeldenummer: 11722321.4
(22) Anmeldetag: 18.05.2011
(51) Int. Cl.: F16D 21/06, F16H 57/00, F16H 3/00

(54) **DOPPELKUPPLUNGSGETRIEBE FÜR KRAFTFAHRZEUGE**
DOUBLE-CLUTCH TRANSMISSION FOR MOTOR VEHICLES
BOÎTE DE VITESSE À DOUBLE EMBRAYAGE POUR VÉHICULES AUTOMOBILES

(30) Priorität: 19.05.2010 DE 102010021033
(43) Veröffentlichungstag der Anmeldung: 27.03.2013
(73) Patentinhaber: Audi AG, 85045 Ingolstadt (DE)
(72) Erfinder: FLEISCHMANN, Hanns-Peter, 85134 Stammham (DE); WAGNER, Rupert, 86556 Kühbach (DE)
(74) Vertreter: Wohnert, Dietmar
(86) Internationale Anmeldenummer: PCT/EP2011/002472
(87) Internationale Veröffentlichungsnummer: WO 2011/144329

(56) Entgegenhaltungen:
- DE-A1-102008 040 172
- FR-A- 1 261 415
- US-A- 3 009 553

## Beschreibung

Die Erfindung betrifft eine Antriebsanordnung an einem Doppelkupplungsgetriebe für Kraftfahrzeuge gemäß dem Oberbegriff des Patentanspruches 1.

Doppelkupplungsgetriebe sind in einer Vielzahl von Vorschlägen aus der Patentliteratur allgemein bekannt, wobei die beiden Lamellenkupplungen teilweise radial übereinander oder auch axial hintereinander angeordnet sein können. Die beiden Abtriebswellen der Kupplungen sind als Hohlwellen ineinander verschachtelt und die Wälzlagerungen, soweit zugänglich, an den Stirnwänden des Getriebegehäuses und zwischen den Wellen (einschließlich der Eingangswelle) zur Aufnahme der Axial- und Radialbelastungen sowie gegebenenfalls auftretender Biegemomente angeordnet.

Aus der DE 10 2008 040 172 A1 ist ein gattungsgemäßes Doppelkupplungsgetriebe bekannt, bei dem zwei axial hintereinander geschaltete Kupplungen zwischen voneinander beabstandeten Stirnwänden des Getriebegehäuses positioniert sind. Deren trommelförmiges Antriebselement ist über eine Getriebe-Eingangswelle angetrieben. Die beiden Kupplungen treiben über zwei topfförmige Abtriebselemente auf zwei koaxial zu der Getriebe-Eingangswelle angeordnete Abtriebswellen ab.

Aufgabe der Erfindung ist es, eine Antriebsanordnung an einem Doppelkupplungsgetriebe für Kraftfahrzeuge vorzuschlagen, die eine baulich und fertigungstechnisch günstige Lagerung der Wellen des Doppelkupplungsgetriebes ergibt und die in besonderem Maße die die Kupplungsfunktion der Lamellenkupplungen störenden Einflüsse von den Kupplungselementen fernhält bzw. eine komfortable Kupplungsbetätigung ermöglicht.

Diese Aufgabe wird erfindungsgemäß mit den Merkmalen des Patentanspruches 1 gelöst. Vorteilhafte Weiterbildungen der Erfindung sind Gegenstand der abhängigen Ansprüche.

Gemäß Anspruch 1 wird eine Antriebsanordnung an einem Doppelkupplungsgetriebe für Kraftfahrzeuge vorgeschlagen, mit zwei in einem Getriebegehäuse axial hintereinander geschalteten Kupplungen, insbesondere Lamellenkupplungen, die zwischen voneinander beabstandeten Stirnwänden des Getriebegehäuses positioniert sind und deren bevorzugt trommelförmiges Antriebselement über eine Eingangswelle des Getriebes angetrieben ist, wobei die Kupplungen über zwei bevorzugt topfförmige Abtriebselemente auf zwei koaxial zu der Eingangswelle angeordnete Abtriebswellen abtreiben, und zwar vorzugsweise alternierend abtreiben. Erfindungsgemäß ist vorgesehen, dass die bevorzugt direkt bzw. unmittelbar im Bereich einer ersten Stirnwand drehbar gelagerte Eingangswelle bis zu der, der ersten Stirnwand gegenüberliegenden, zweiten Stirnwand des Getriebegehäuses geführt und dort mittelbar bzw. indirekt über die ebenfalls im Bereich der zweiten Stirnwand drehbar gelagerten Abtriebswellen drehbar gelagert ist. Damit kann die Eingangswelle eindeutig in voneinander beabstandeten, durch die Stirnwände ausgebildeten Gehäuseebenen gelagert werden. Die Eingangswelle ist über ihren Abtriebsflansch zum Antriebselement der Kupplungen hinaus bis zu der zweiten Stirnwand verlängert bzw. geführt. Damit gelingt eine besonders robuste Lagerung der Eingangswelle und der Abtriebswellen, die somit keine störenden Reaktionsmomente auf die Kupplungselemente der Kupplungen, vorzugsweise der Lamellenkupplungen, ausüben und die biegemomentfrei zwischen den beiden Stirnwänden des Getriebegehäuses abgestützt bzw. gelagert sind und dementsprechend hohe Antriebsmomente übertragen können.

Durch die biegemomentenfreie Lagerung wird eine Taumelbewegung und damit ein unerwünschtes Kupplungsruckeln (Creep-Ruckeln) vermieden.

Dies wird insbesondere mit einer Ausführungsform erreicht, bei der eine äußere Abtriebswelle im Bereich der Stirnwand, insbesondere im Bereich einer durch diese Stirnwand definierten Lagerebene bzw. eines durch diese Stirnwand definierten Lagerbereiches, drehbar auf einer inneren Abtriebswelle gelagert ist, welche innere Abtriebswelle wiederum drehbar auf der Eingangswelle gelagert ist. Die Lager der Eingangswelle und der Abtriebswellen untereinander sowie in den Stirnwänden sind vorzugsweise durch robuste Wälzlager gebildet, wobei grundsätzlich auch der Einsatz von Gleitlagern möglich wäre.

Ferner wird vorgeschlagen, dass zumindest die beiden inneren Wälzlager zwischen der Eingangswelle und der inneren Abtriebswelle und zwischen der inneren und der äußeren Abtriebswelle Nadellager sind, die in radialer Richtung nur einen geringen Bauraum benötigen, wodurch ein kompakter Wellenverbund geschaffen ist.

Des Weiteren weisen die beiden Abtriebselemente der Lamellenkupplungen rohrförmige Wellenstummel auf, die über in Drehrichtung formschlüssig wirkende Verbindungen, insbesondere Steckverbindungen bzw. -verzahnungen jeweils mit den als Hohlwellen ausgeführten Abtriebswellen trieblich verbunden sind, wobei jeweils im Bereich der Steckverbindungen ein Wälzlager zwischen den Wellenstummeln und ein Wälzlager zwischen der äußeren Abtriebswelle und der besagten Stirnwand des Getriebegehäuses vorgesehen ist. Daraus resultiert eine besonders steife, innere Abstützung der Wellen zueinander bei einem äußerst kompakten, montagegünstigen Wellenverbund im Kupplungsbereich. Die beiden Lager sind bevorzugt Wälzlager, höchst bevorzugt flach bauende Nadellager.

Zusätzlich kann der mit der inneren Abtriebswelle trieblich verbundene Wellenstummel im Bereich des Abtriebsflansches der Eingangswelle auf der Eingangswelle über ein weiteres Lager, vorzugsweise ein Wälz- bzw. Nadellager, radial abgestützt sein. Damit ist sichergestellt, dass jegliche an den Kupplungselementen gegebenenfalls wirkende innere und äußere Störmomente sowohl in radialer als auch in axialer Richtung über die Wälzlager zuverlässig abgestützt sind und eine komfortable, ruckfreie Kupplungsfunktion begünstigt ist.

Der verlängerte Abschnitt der Eingangswelle kann schließlich als Wellenfortsatz entweder unmittelbar an die Eingangswelle angeformt oder in einer alternativen Ausgestaltung separat gefertigt und formschlüssig und/oder stoffschlüssig fest mit der Eingangswelle verbunden sein.

Ein Ausführungsbeispiel der Erfindung ist im Folgenden mit weiteren Einzelheiten näher erläutert.

Die anliegende, schematische Zeichnung zeigt in einem halben Längsschnitt eine Antriebsanordnung eines nur teilweise dargestellten Doppelkupplungsgetriebes für Kraftfahrzeuge, mit zwei Lamellenkupplungen K1, K2, deren Kupplungselemente trieblich mit einer Eingangswelle und zwei Abtriebswellen verbunden sind und deren Wälzlagerungen im umgebenden Getriebegehäuse und im Wellenverbund vorgesehen sind.

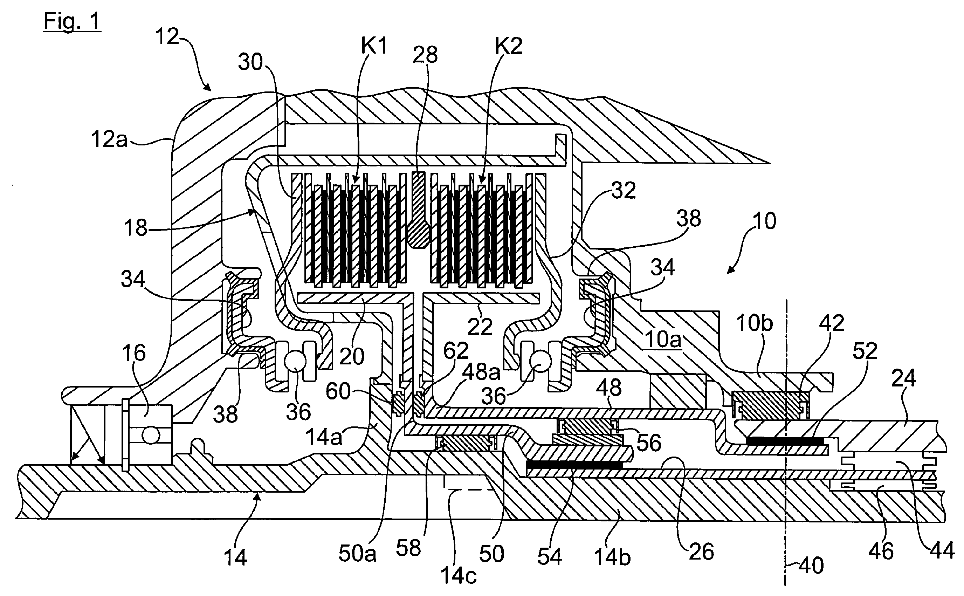

In der Zeichnung ist eine obere Hälfte eines Ausschnittes eines Doppelkupplungsgetriebes für Kraftfahrzeuge dargestellt, mit einem an ein Getriebegehäuse 10 (nur angedeutet) angebauten, mehrteiligen Gehäuseabschnitt 12, in dem zwei hydraulisch betätigte Lamellenkupplungen K1 und K2 als Reibungskupplungen angeordnet sind.

Dabei leitet eine über ein erstes Wälzlager bzw. ein Kugellager 16 in der eingangsseitigen Stirnwand 12a (oder Gehäusedeckel) des Gehäuseabschnittes 12 drehbar gelagerte Eingangswelle 14 ein definiertes Antriebsdrehmoment von einer nicht dargestellten Brennkraftmaschine (oder einer anderen Antriebsquelle) auf ein trommelförmiges, einseitig offenes Antriebselement 18, das trieblich in an sich bekannter Weise mit Kupplungslamellen der beiden Lamellenpakete der Lamellenkupplungen K1 und K2 verbunden ist.

Weitere, zwischen diesen Kupplungslamellen befindliche Kupplungslamellen sind trieblich mit topfförmigen Abtriebselementen 20, 22 verbunden, die auf zur Eingangswelle 14 koaxial angeordnete Abtriebs-Hohlwellen 24, 26 des Doppelkupplungsgetriebes abtreiben.

Die beiden einander axial benachbarten Lamellenpakete der Lamellenkupplungen K1, K2 sind mittig an einem Reaktionsglied 28 abgestützt und von beiden Seiten her über sich mit dem Antriebselement 18 mitdrehende, axial verschiebliche Anpressscheiben 30, 32 beaufschlagbar.

Die Lamellenkupplungen K1, K2 sind soweit nicht beschrieben üblicher Bauart, wobei deren Lamellen alternierend mit dem äußeren Antriebselement 18 und den inneren Abtriebselementen 20, 22 über axial ausgerichtete Kerbverzahnungen verbunden sind, so dass durch Beaufschlagung der auf der Zeichnung linken Anpressscheibe 30 die Kupplung K1 und durch Beaufschlagung der rechten Anpressscheibe 32 die Kupplung K2 schließbar und damit das Antriebsmoment der Eingangswelle 14 auf die Abtriebswelle 24 oder die Abtriebswelle 26 des Doppelkupplungsgetriebes übertragbar ist.

Die hier vorliegend als Ausrückvorrichtung bezeichnete, funktionell eigentlich eine Einrückvorrichtung darstellende Anpressvorrichtung der beiden Kupplungen K1 und K2 setzt sich jeweils zusammen aus einem Ringkolben 34 und einem am Ringkolben 34 angeordneten Ein- bzw. Ausrücklager 36.

Die Ringkolben 34 sind in Bohrungen 38 der radialen Stirnwände 12a, 10a des Getriebegehäuses 10, 12 axial verschiebbar gelagert und entsprechend abgedichtet und können in nicht dargestellter Weise hydraulisch beaufschlagt werden.

Die Eingangswelle 14 und die beiden Abtriebswellen 24, 26 sind im Getriebegehäuse 10, 12 wie folgt wälzgelagert:

Zunächst sind alle drei Wellen 14, 24, 26 an der Stirnwand 10a des Getriebegehäuses 10 in einer im Wesentlichen einheitlichen, radialen Ebene 40 über Wälzlager bzw. Nadellager 42, 44, 46 drehbar gelagert.

Dabei ist die radial äußere, hohle Abtriebswelle 24 über das Nadellager 42 direkt in dem entsprechenden Lagerhals 10b in der Stirnwand 10a gelagert, während die radial innen liegende Abtriebswelle 26 über das Nadellager 44 innerhalb der äußeren Abtriebswelle 24 indirekt gelagert ist.

Ferner ist die radial innenliegende Eingangswelle 14 über den trieblich an das trommelförmige Antriebselement 18 der Lamellenkupplungen K1, K2 angeschlossenen Abtriebsflansch 14a hinaus in Richtung der Stirnwand 10a mit einem Wellenfortsatz 14b verlängert, der über das dritte Nadellager 46 innerhalb der mittleren Abtriebswelle 26 und ebenfalls in etwa in der gemeinsamen Wälzlagerebene 40 wälzgelagert ist.

Die triebliche Verbindung der beiden Abtriebswellen 24, 26 erfolgt über an die topfförmigen Abtriebselemente 20, 22 der Lamellenkupplungen K1, K2 angeschlossene, rohrförmige Wellenstummel 48, 50, die jeweils über Steckverzahnungen 52, 54 (hier schwarz unterlegt eingezeichnet) mit den Abtriebswellen 24, 26 in Drehrichtung formschlüssig verbunden sind.

Die zwischen dem radial äußeren Wellenstummel 48 und der Abtriebswelle 24 vorgesehene Steckverzahnung 52 liegt wiederum in etwa im Bereich in der radialen Ebene 40 der Stirnwand 10a des Getriebegehäuses 10 und der besagten Nadellager 42, 44, 46.

Über zwei axial zueinander versetzte, weitere Wälzlager bzw. Nadellager 56, 58 ist der Wellenstummel 48 auf dem Wellenstummel 50 und der Wellenstummel 50 auf dem Wellenfortsatz 14b der Eingangswelle 14 wälzgelagert, so dass ein in sich steifer, biegemomentfreier Wellenverbund geschaffen ist.

Das Nadellager 56 ist dabei wie ersichtlich ist in einer radialen Ebene mit der Steckverbindung 54 zwischen dem Wellenstummel 50 und der inneren Abtriebswelle 26 positioniert, während das Nadellager 58 nahe dem Abtriebsflansch 14a auf der Eingangswelle 14 angeordnet ist.

Die Wellenstummel 48, 50 sind zudem über an den Wellenstummeln 48, 50 angeformte Ringflansche 48a, 50a und Axiallager 60, 62 in axialer Richtung an dem Abtriebsflansch 14a der Eingangswelle 14 abgestützt.

Der Wellenfortsatz 14b der Eingangswelle 14 kann abweichend zum Ausführungsbeispiel auch eine gebaute Konstruktion aufweisen und beispielsweise teleskopisch wie in gestrichelten Linien angedeutet mit einem Ansatz 14c in die hohle Eingangswelle 14 eingesetzt und mit dieser in einem verzugsarmen Schweißverfahren (zum Beispiel Laserschweißen oder Reibschweißen) fest verbunden sein.

Wie aus der Zeichnung ersichtlich ist, ist die Eingangswelle 14 mit dem Wellenfortsatz 14b über das Wälzlager 16 unmittelbar an der Stirnwand 12a des Gehäuseabschnittes 12 und über das Nadellager 46 mittelbar über die weiteren Nadellager 44, 42 in der zweiten Stirnwand 10a des Getriebegehäuses 10, 12 biegesteif gelagert, wobei der Wellenverbund 14, 24, 26 über die weiteren Nadellager 56, 58 und die Axiallager 60, 62 derart stabilisiert ist, dass keine gegebenenfalls auf die Eingangswelle 14 und/oder die Abtriebswellen 24, 26 wirkenden Störmomente aus den angrenzenden Getriebeelementen, zum Beispiel aus Wellendurchbiegungen bei hohen Belastungen, auftreten können und eine störungsfreie Kupplungsfunktion der beiden Lamellenkupplungen K1, K2 sichergestellt ist.

Mit der erfindungsgemäßen Lösung wird somit die Eingangs- bzw. Antriebswelle 14 eindeutig in den hier durch die Stirnwände 10a, 12a gebildeten Gehäuseebenen gelagert (in der Ebene 10a indirekt über die Lager 42, 44 und 46).

## Patentansprüche

1. Doppelkupplungsgetriebe für Kraftfahrzeuge mit einer Antriebsanordnung, mit zwei in einem Getriebegehäuse axial hintereinander geschalteten Lamellenkupplungen (K1, K2), die zwischen voneinander beabstandeten Stirnwänden (10a, 12a) des Getriebegehäuses positioniert sind und deren Antriebselement (18) über eine Eingangswelle (14) des Getriebes angetrieben ist, wobei die Lamellenkupplungen (K1, K2) über zwei Abtriebselemente (20, 22) auf zwei koaxial zu der Eingangswelle (14) angeordnete Abtriebswellen (24, 26) abtreiben, wobei die beiden Abtriebselemente (20, 22) der Lamellenkupplungen (K1, K2) rohrförmige Wellenstummel (48, 50) aufweisen, die über in Drehrichtung formschlüssig wirkende Verbindungen (52, 54) jeweils mit den als Hohlwellen ausgeführten Abtriebswellen (24, 26) trieblich verbunden sind, wobei die im Bereich einer ersten Stirnwand (12a) des Getriebegehäuses (10) drehbar gelagerte Eingangswelle (14) bis zu der, der ersten Stirnwand (12a) gegenüberliegenden, zweiten Stirnwand (10a) geführt und dort mittelbar über die ebenfalls im Bereich der zweiten Stirnwand (10a) drehbar gelagerten Abtriebswellen (24, 26) drehbar gelagert ist, wobei im Bereich der in Drehrichtung wirkenden Verbindung (52) des einen Wellenstummels (48) mit einer äußeren Abtriebswelle (24) der Abtriebswellen (24, 26) ein Wälzlager (42) zwischen der äußeren Abtriebswelle (24) und der zweiten Stirnwand (10a) des Getriebegehäuses (10) vorgesehen ist, wobei die Eingangswelle (14) in Längserstreckungsrichtung gesehen über einen Abtriebsflansch (14a) zum Antriebselement (18) der Lamellenkupplungen (K1, K2) hinaus bis zu der zweiten Stirnwand (10a) geführt ist, und wobei die Wellenstummel (48, 50a) über an den rohrförmigen Wellenstummeln (48, 50) angeformte Ringflansche (48a, 50a) und Axiallager (60, 62) in axialer Richtung an dem Abtriebsflansch (14a) der Eingangswelle (14) abgestützt sind, **dadurch gekennzeichnet, dass** im Bereich der in Drehrichtung wirkenden Verbindung (54) des anderen Wellenstummels (50) mit einer inneren Abtriebswelle (26) der Abtriebswellen (24, 26) ein Wälzlager (56) zwischen den Wellenstummeln (48, 50) vorgesehen ist, so dass der eine Wellenstummel (48) über das Wälzlager (56) auf dem anderen Wellenstummel (50) radial abgestützt ist.

2. Doppelkupplungsgetriebe nach Anspruch 1, **dadurch gekennzeichnet, dass** die äußere Abtriebswelle (24) im Bereich einer durch die zweite Stirnwand (10a) definierten Lagerebene und/oder eines durch die zweite Stirnwand (10a) definierten Lagerbereiches mittels eines Wälzlagers (44) drehbar auf der inneren Abtriebswelle (26) gelagert ist, welche innere Abtriebswelle (26) wiederum mittels eines Wälzlagers (46) drehbar auf der Eingangswelle (14) gelagert ist.

3. Doppelkupplungsgetriebe nach Anspruch 2, **dadurch gekennzeichnet, dass** die beiden zwischen der Eingangswelle (14) und der inneren Abtriebswelle (26) sowie zwischen der inneren und der äußeren Abtriebswelle (24, 26) angeordneten inneren Lager (44, 46) als Nadellager ausgebildet sind.

4. Doppelkupplungsgetriebe nach einem der vorhergehenden Ansprüche, **dadurch gekennzeichnet, dass** das Lager (56) zwischen den Wellenstummeln (48, 50) und das Wälzlager (42) zwischen der äußeren Abtriebswelle (24) und der zweiten Stirnwand (10a) durch Nadellager gebildet sind.

5. Doppelkupplungsgetriebe nach einem der vorhergehenden Ansprüche, **dadurch gekennzeichnet, dass** der mit der inneren Abtriebswelle (26) trieblich verbundene Wellenstummel (50) im Bereich des zum Antriebselement (18) abtreibenden Abtriebsflansches (14a) der Eingangswelle (14) auf der Eingangswelle (14) über ein weiteres Lager (58), insbesondere ein Nadellager, radial abgestützt ist.

6. Doppelkupplungsgetriebe nach einem der vorhergehenden Ansprüche, **dadurch gekennzeichnet, dass** die Eingangswelle (14) einstückig ausgebildet ist und einen, über den Abtriebsflansch (14a) zum Antriebselement (18) der Lamellenkupplungen (K1, K2) hinaus verlängerten Abschnitt aufweist, der durch einen unmittelbar an die Eingangswelle (14) angeformten Wellenfortsatz (14b) gebildet ist, oder dass die Eingangswelle (14) mehrteilig ausgebildet ist und ein über den Abtriebsflansch (14a) zum Antriebselement (18) der Lamellenkupplungen (K1, K2) hinaus verlängerter Abschnitt der Eingangswelle (14) ein separat gefertigter Wellenfortsatz (14b) ist, der formschlüssig und/oder stoffschlüssig fest mit der Eingangswelle (14) verbunden ist.

## Claims

1. Dual-clutch transmission for motor vehicles having a drive arrangement with two axially series-connected, multi-plate clutches (K1, K2) in a transmission case, which are positioned between spaced apart end walls (10a, 12a) of the transmission case, and where the drive element (18) is driven via an input shaft (14) of the transmission, wherein the multi-plate clutches (K1, K2) drive off via two drive elements (20, 22) on two drive shafts (24, 26) co-axially disposed with the input shaft (14), wherein the two drive elements (20, 22) of the multi-disc clutches (K1, K2) have tubular shaft stubs (48, 50), which are propulsively connected in the rotational direction via positively acting connections (52, 54) respectively to drive shafts (24, 26) designed as hollow shafts, wherein the rotatably mounted input shaft (14) in the region of a first end wall (12a) of the transmission case (10) is guided up to the second end wall (10a) opposite to the first end wall (12a) and there indirectly mounted via the rotatably mounted drive shafts (24, 26) in the region of the second end wall (10a), wherein in the area of a connection (52) of a shaft stub (48) acting in the rotational direction with an outer drive shaft (24) of the drive shafts (24, 26), a roller bearing (42) is provided between the outer drive shaft (24) and the second end wall (10a) of the transmission case (10), wherein the input shaft (14) seen in longitudinal direction is guided via an output flange (14a) to the drive element (18) of the multi-plate clutches (K1, K2) and up to the second end wall (10a), and wherein the shaft stubs (48, 50a) on to the tubular shaft stubs (48, 50) integrally formed annular flanges (48a, 50a) and axial bearings (60, 62) are supported in the axial direction on the output flange (14a) of the input shaft (14) **characterized in that** in the area of the connection (54) acting in the rotational direction of the other shaft stub (50) with an inner drive shaft (26) of the drive shafts (24, 26) a roller bearing (56) is provided between the shaft stubs (48, 50), so that the one shaft stub (48) is radially supported via the roller bearing (56) on the other shaft stub (50).

2. Dual-clutch transmission according to claim 1, **characterized in that** the outer drive shaft (24) in the area of a bearing plane defined by the second end wall (10a) and/or a bearing area defined by the second end wall (10a) is mounted rotatably by means of a roller bearing (44) on the inner drive shaft (26), which inner drive shaft is in turn rotatably mounted by means of a roller bearing (46) on the input shaft (14).

3. Dual-clutch transmission according to claim 2, **characterized in that** both inner bearings (44, 46) between the input shaft (14) and the inner drive shaft (26), as well as between the inner and the outer drive shafts (24, 26) are arranged as needle bearings.

4. Dual-clutch transmission according to one of the preceding claims, **characterized in that** the bearing (56) between the shaft stubs (48, 50) and the roller bearing (42) between the outer drive shaft (24) and the second end wall (10a) are arranged as needle bearings.

5. Dual-clutch transmission according to one of the preceding claims, **characterized in that** the shaft stub (50) propulsively connected to the inner drive shaft (26) is supported radially in the area of the driving output flange (14a) of drive element (18) of the input shaft (14), on the input shaft (14) via another bearing (58), in particular a needle bearing.

6. Dual-clutch transmission according to one of the preceding claims, **characterized in that** the input shaft (14) is integrally formed and, beyond the output flange (14a) to drive element (18) of the multi-plate clutches (K1, K2) has an extended portion which is formed by a shaft extension (14b) directly on the input shaft (14), or that the input shaft (14) is a multipart design, and, over the output flange (14a) of the drive element (18) of the multi-plate clutches (K1, K2) there is an extended portion of the input shaft (14), and a separately produced shaft extension (14b), which is positively and/or materially integral with the input shaft (14).

## Revendications

1. Boîte de vitesse à double embrayage pour véhicules automobiles avec un aménagement d'entraînement, avec deux embrayages multidisques (K1, K2) commutés axialement l'un derrière l'autre dans un carter de boîte de vitesse, lesquels embrayages sont positionnés entre des parois avant (10a, 12a) du carter de boîte de vitesse espacées l'une de l'autre et dont l'élément d'entraînement (18) est entraîné via un arbre d'entrée (14) de la boîte de vitesse, dans lequel les embrayages multidisques (K1, K2) entraînent via deux éléments de sortie (20, 22) deux arbres de sortie (24, 26) aménagés coaxialement à l'arbre d'entrée (14), dans laquelle les deux éléments de sortie (20, 22) des embrayages multidisques (K1, K2) présentent des bouts d'arbre tubulaires (48, 50) qui sont raccordés de manière à être entraînés via des liaisons (52, 54) opérant mécaniquement dans le sens de rotation respectivement avec les arbres de sortie (24, 26) qui se présentent sous la forme d'arbres creux, dans laquelle l'arbre d'entrée (14) monté à rotation dans la zone d'une première paroi avant (12a) du carter de boîte de vitesse (10) est guidé jusqu'à la seconde paroi avant (10a) opposée à la première paroi avant (12a) et y est montée directement à rotation via les arbres de sortie (24, 26) montés également à rotation dans la zone de la seconde paroi avant (10a), dans laquelle, dans la zone de la liaison (52) - opérant dans le sens de rotation - du premier bout d'arbre (48) avec un arbre de sortie externe (24) des arbres se sortie (24, 26), il est prévu un palier à roulement (42) entre l'arbre de sortie externe (24) et la seconde paroi avant (10a) du carter de boîte de vitesse (10), dans laquelle l'arbre d'entrée (14), observé dans la direction d'extension longitudinale, est guidée via une bride menée (14a) vers l'élément d'entraînement (18) des embrayages multidisques (K1, K2) jusqu'à la seconde paroi avant (10a) et dans laquelle les bouts d'arbre (48, 50a) sont pressés via les brides annulaires (48a, 50a) formées sur les bouts d'arbre tubulaires (48, 50) et les paliers axiaux (60, 62) dans la direction axiale sur la bride menée (14a) de l'arbre d'entrée (14), **caractérisée en ce que**, dans la zone de la liaison (54) opérant dans le sens de rotation de l'autre bout d'arbre (50) avec un arbre de sortie interne (26) des arbres de sortie (24, 26), il est prévu un palier de roulement (56) entre les bouts d'arbre (48, 50) de sorte que le premier bout d'arbre (48) soit pressé radialement sur l'autre bout d'arbre (50) via la palier de roulement (56).

2. Boîte de vitesse à double embrayage selon la revendication 1, **caractérisée en ce que** l'arbre de sortie externe (24) est monté à rotation sur l'arbre de sortie interne (26) dans la zone d'un plan de palier défini par la seconde paroi avant (10a) et/ou d'un site de palier défini par la seconde paroi avant (10a) au moyen d'un palier de roulement (44), lequel arbre de sortie interne (26) est à nouveau monté à rotation sur l'arbre d'entrée (14) au moyen d'un palier de roulement (46).

3. Boîte de vitesse à double embrayage selon la revendication 2, **caractérisée en ce que** les deux paliers internes (44, 46) aménagés entre l'arbre d'entrée (14) et l'arbre de sortie interne (26) ainsi qu'entre l'arbre de sortie interne et l'arbre de sortie externe (24, 26) sont conformés en roulement à aiguilles.

4. Boîte de vitesse à double embrayage selon l'une quelconque des revendications précédentes, **caractérisée en ce que** le palier (56) entre les bouts d'arbre (48, 50) et le palier de roulement (42) entre l'arbre de sortie externe (24) et la seconde paroi avant (10a) sont formés par des roulements à aiguilles.

5. Boîte de vitesse à double embrayage selon l'une quelconque des revendications précédentes, **caractérisée en ce que** le bout d'arbre (50) relié en mode d'entraînement à l'arbre de sortie interne (26) est pressé radialement dans la zone de la bride menée (14a) de l'arbre d'entrée (14) sortant de l'élément d'entraînement (18) sur l'arbre d'entrée (14) via un autre palier (58), en particulier un roulement à aiguilles.

6. Boîte de vitesse à double embrayage selon l'une quelconque des revendications précédentes, **caractérisée en ce que** l'arbre d'entrée (14) est formé d'une seule pièce et présente une section prolongée jusqu'à l'élément d'entraînement (18) des embrayages multidisques (K1, K2) via la bride menée (14a), laquelle section est formée par un épaulement d'arbre (14b) formé directement sur l'arbre d'entrée (14), ou l'arbre d'entrée (14) est conçu en plusieurs pièces et une section de l'arbre d'entrée (14) prolongée via la bride menée (14a) jusqu'à l'élément d'entraînement (18) des embrayages multidisques (K1, K2) de l'arbre d'entrée (14) est un prolongement d'arbre (14b) fixé séparément qui est relié de manière mécanique et/ou matérielle solidement à l'arbre d'entrée (14).
